(19) Europäisches Patentamt
European Patent Office
Office européen des brevets

(11) Veröffentlichungsnummer: **0 003 098**
**A1**

(12) # EUROPÄISCHE PATENTANMELDUNG

(21) Anmeldenummer: **79100004.5**

(22) Anmeldetag: **02.01.79**

(51) Int. Cl.$^2$: **C 07 F 9/65**
**A 01 N 9/36**

(30) Priorität: **14.01.78 DE 2801584**

(43) Veröffentlichungstag der Anmeldung:
**25.07.79 Patentblatt 79/15**

(84) Benannte Vertragsstaaten:
**BE CH DE FR GB IT NL**

(71) Anmelder: **Bayer Aktiengesellschaft**
**Zentralbereich Patente,Marken und Lizenzen Bayerwerk**
**D-5090 Leverkusen 1(DE)**

(72) Erfinder: **Maurer, Fritz, Dr.**
**Roeberstrasse 8**
**D-5600 Wuppertal 1(DE)**

(72) Erfinder: **Hammann, Ingeborg, Dr.**
**Belfortstrasse 9**
**D-5000 Köln 1(DE)**

(72) Erfinder: **Behrenz, Wolfgang, Dr.**
**Untergründemich 14**
**D-5063 Overath(DE)**

(54) **Halogensubstituierte Pyrimidin(2)yl-thiono-thiol-phosphor(phosphon)-säureester, Verfahren zu ihrer Herstellung und ihre Verwendung als Insektizide und Akarizide.**

(57) Die Erfindung betrifft neue Pyrimidin(2)yl-thiono-thiol-phosphor-(phosphon)-säureester der Formel I

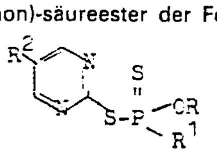

in welcher
R für Alkyl
$R^1$ für Alkyl, Aryl oder Alkoxy und
$R^2$ für Halogen stehen.
Die neuen Verbindungen weisen starke insektizide und akarizide Eigenschaften auf.

EP 0 003 098 A1

0003098

BAYER AKTIENGESELLSCHAFT
Zentralbereich
Patente, Marken und Lizenzen

5090 Leverkusen, Bayerwerk
Ad-Th
(Ia)

# Halogensubstituierte Pyrimidin(2)yl-thiono-thiol-phosphor(phosphon)-säureester, Verfahren zu ihrer Herstellung und ihre Verwendung als Insektizide und Akarizide

Die Erfindung betrifft neue halogensubstituierte Pyrimidin(2)-yl-thiono-thiol-phosphor(phosphon)-säureester, welche insektizide und akarizide Eigenschaften besitzen sowie ein Verfahren zu ihrer Herstellung.

Es ist bereits bekannt, daß Pyrimidinyl-thiono-thiol-phosphorsäureester, z.B. O,O-Dimethyl- bzw. O,O-Diäthyl-S-(2-chlor-4-methyl-pyrimidin(6)yl)-thiono-thiol-phosphorsäureester, insektizide Eigenschaften besitzen (vergleiche Deutsche Auslegeschrift 1 445 7o9).

Es wurden die neuen Pyrimidin(2)yl-thiono-thiol-phosphor-(phosphon)-säureester der Formel I

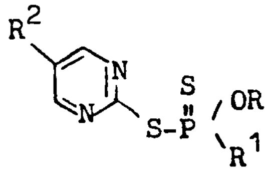

(I)

synthetisiert, in welcher

R für Alkyl,

$R^1$ für Alkyl, Aryl oder Alkoxy und

$R^2$ für Halogen stehen.

Die neuen Verbindungen weisen starke insektizide und akarizide Eigenschaften auf.

Weiterhin wurde gefunden, daß man Pyrimidin(2)yl-thiono-thiolphosphor(phosphon)-säureester der Formel I erhält, wenn man Thiono-Thiol-phosphor(phosphon)-säureester der Formel II

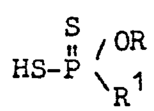

(II)

worin R und $R^1$ die oben angegebene Bedeutung haben,

mit 2-Chlor-pyrimidinen der Formel III

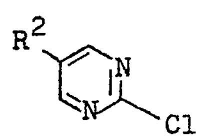

(III)

worin $R^2$ die oben angegebene Bedeutung hat,

gegebenenfalls in Gegenwart eines Lösungs- oder Verdünnungsmittels umsetzt, wobei gegebenenfalls die Thiolverbindungen

der Formel II ohne Zwischenisolierung aus den entsprechenden Alkalisalzen durch Säurezugabe freigesetzt werden.

Überraschenderweise zeigen die erfindungsgemäßen Pyrimidin(2)-yl-thiono-thiol-phosphor(phosphon)-säureester eine bessere insektizide und akarizide Wirkung als die entsprechenden aus dem Stand der Technik vorbekannten Verbindungen analoger Konstitution und gleicher Wirkungsrichtung. Die Produkte gemäß vorliegender Erfindung stellen somit eine echte Bereicherung der Technik dar.

Verwendet man beispielsweise O-Methyl-thionothiolläthanphosphonsäuremonoester und 2-Chlor-5-brom-pyrimidin als Ausgangsstoffe, so kann der Reaktionsverlauf durch das folgende Formelschema wiedergegeben werden:

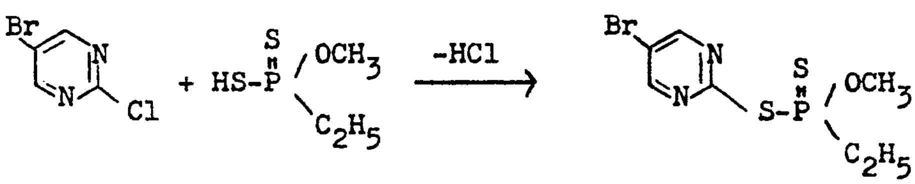


Die zu verwendenden Ausgangsstoffe sind durch die Formeln II und III allgemein definiert. Vorzugsweise stehen darin jedoch

R für geradkettiges oder verzweigtes Alkyl mit 1 bis 6, insbesondere 1 bis 4, Kohlenstoffatomen,

$R^1$ für geradkettiges oder verzweigtes Alkyl bzw. Alkoxy mit 1 bis 6, insbesondere 1 bis 4, Kohlenstoffatomen je Alkylrest, oder Phenyl und

$R^2$ für Chlor oder Brom.

Die als Ausgangsstoffe zu verwendenden Thiono-Thiol-phosphor-(phosphon)-säureester (II) sind bekannt und nach literaturbekannten Verfahren auch technisch gut herstellbar. Als Beispiele dafür seien im einzelnen genannt:
O,O-Dimethyl-, O,O-Diäthyl-, O,O-Di-n-propyl-, O,O-Di-iso-propyl-, O,O-Di-n-butyl-, O,O-Di-iso-butyl-, O,O-Di-sek.-butyl-, O-Methyl-O-äthyl-, O-Methyl-O-n-propyl-, O-Methyl-O-iso-propyl-, O-Methyl-O-n-butyl-, O-Methyl-O-iso-butyl-, O-Methyl-O-sek.-butyl-, O-Methyl-O-tert.-butyl-, O-Äthyl-O-n-propyl-, O-Äthyl-O-iso-propyl-, O-Äthyl-O-n-butyl-, O-Äthyl-O-sek.-butyl-, O-Äthyl-O-iso-butyl-, O-n-Propyl-O-butyl- bzw. O-iso-Propyl-O-butyl-thionothiolphosphorsäurediester, ferner
O-Methyl-, O-Äthyl-, O-n-Propyl-, O-iso-Propyl-, O-n-Butyl-, O-iso-Butyl-, O-sek.-Butyl-, O-tert.-Butyl-methan- bzw.-äthan-, -n-propan-, -iso-propan-, -n-butan-, -iso-butan-, -sek.-butan-bzw. -benzolthionothiolphosphonsäuremonoester.

Die weiterhin als Ausgangsstoffe zu verwendenden 2-Chlorpyrimidine (III) können analog zu literaturbekannten Verfahren hergestellt werden, indem man die entsprechenden 2-Hydroxypyrimidine mit anorganischen Säurechloriden, z.B. mit Phosphoroxichlorid, umsetzt (vergleiche Australian J. Chem. 17, (1964), 794-8o2).

Als Beispiele hierfür seien 2,5-Dichlor- und 2-Chlor-5-brom-pyrimidin genannt.

Das Verfahren zur Herstellung der erfindungsgemäßen Pyrimidinyl-thiono-thiol-phosphor(phosphon)-säureester wird bevorzugt unter Verwendung geeigneter Lösung- oder Verdünnungsmittel durchgeführt. Als solche kommen praktisch alle inerten organischen Solventien infrage. Hierzu gehören insbesondere aliphatische und aromatische, gegebenenfalls chlorierte Kohlenwasserstoffe, wie Benzin, Benzol, Toluol, Xylol, Methylenchlorid, Chloroform, Tetrachlorkohlenstoff, Chlorbenzol und o-Dichlorbenzol, Äther wie Diäthyl- und Dibutyläther, Tetrahydrofuran und Dioxan, Ketone wie Aceton, Methyläthyl-, Methylisopropyl- und Methylisobutylketon sowie Nitrile wie Acetonitril und Propionitril.

Die Reaktionstemperatur kann innerhalb eines größeren Bereichs variiert werden. Im allgemeinen arbeitet man zwischen 0 und 1oo°C, vorzugsweise bei 1o bis 6o°C.

Die Umsetzung läßt man im allgemeinen bei Normaldruck ablaufen.

Zur Durchführung des erfindungsgemäßen Verfahrens werden die Ausgangsstoffe in etwa äquimolaren Mengen eingesetzt. Der Einsatz der Thiono-Thiol-phosphor(phosphon)-säureester in einem Überschuß bis ungefähr 3o Molprozent, vorzugsweise bis etwa 1o Molprozent, ist ebenfalls gut möglich.

Die Thiono-Thiol-phosphor(phosphon)-säureester werden gegebenenfalls in situ aus ihren Alkalisalzen durch Zugabe einer mindestens äquimolaren Menge Salzsäure oder Schwefelsäure freigesetzt.

Die Umsetzung wird bevorzugt in einem der oben angegebenen Lösungs- oder Verdünnungsmittel im angegebenen Temperaturbereich durchgeführt. Nach ein- bis mehrstündiger Reaktionsdauer wird gegebenenfalls die Reaktionslösung mit wässriger Carbonat- oder Hydrogencarbonatlösung gewaschen und in üblicher Weise durch Trocknen der organischen Phase und Verdampfen des Lösungsmittels aufgearbeitet.

Die neuen Verbindungen fallen zum Teil kristallin, zum anderen Teil in Form von Ölen an. Letztere können nicht ohne Zersetzung destilliert werden, lassen sich jedoch durch sogenanntes "Andestillieren", d.h. durch längeres Erhitzen unter vermindertem Druck auf mäßig erhöhte Temperaturen von flüchtigen Anteilen befreien und auf diese Weise reinigen. Zur Charakterisierung der neuen Verbindungen dient der Schmelzpunkt bzw. der Brechungsindex.

Bevorzugte neue Verbindungen sind solche der Formel

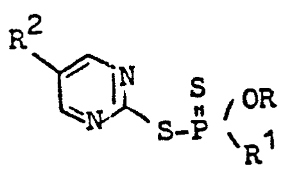

(II)

in welcher

R für geradkettiges oder verzweigtes Alkyl mit 1 bis 6, insbesondere 1 bis 4 Kohlenstoffatomen,

$R^1$ für geradkettiges oder verzweigtes Alkyl oder Alkoxy mit 1 bis 6, insbesondere 1 bis 4 Kohlenstoffatomen je Alkylrest, oder Phenyl und

$R^2$ für Chlor oder Brom stehen.

Als besonders bevorzugte Verbindungen seien im einzelnen genannt:

O,O-Dimethyl-, O,O-Diäthyl-, O,O-Di-npropyl-, O,O-Di-iso-propyl-, O,O-Di-n-butyl-, O,O-Di-iso-butyl-, O,O-Di-sek.-butyl-, O-Methyl-O-äthyl-, O-Methyl-O-n-propyl-, O-Methyl-O-iso-propyl-, O-Methyl-O-n-butyl-, O-Methyl-O-iso-butyl-, O-Methyl-O-sek.-butyl-, O-Methyl-O-tert.-butyl-, O-Äthyl-O-n-propyl-, O-Äthyl-O-iso-propyl-, O-Äthyl-O-n-butyl-, O-Äthyl-O-sek.-butyl-, O-Äthyl-O-iso-butyl-, O-n-Propyl-O-butyl- und O-iso-Propyl-O-butyl-S-[5-chlor-pyrimidin(2)yl]-dithiophosphorsäureester.

O,O-Dimethyl-, O,O-Diäthyl-, O,O-Di-n-propyl-, O,O-Di-iso-propyl-, O,O-Di-n-butyl-, O,O-Di-iso-butyl-, O,O-Di-sek.-butyl-, O-Methyl-O-äthyl-, O-Methyl-O-n-propyl-, O-Methyl-O-iso-propyl-, O-Methyl-O-n-butyl-, O-Methyl-O-iso-butyl-, O-Methyl-O-sek.-butyl-, O-Methyl-O-tert.-butyl-, O-Äthyl-O-n-propyl-, O-Äthyl-O-iso-propyl-, O-Äthyl-O-n-butyl-, O-Äthyl-O-sek.-butyl-, O-Äthyl-O-iso-butyl-, O-n-Propyl-O-butyl- und O-iso-Propyl-O-butyl-S-[5-brom-pyrimidin(2)yl]-dithiophosphorsäureester.

O-Methyl-, O-Äthyl-, O-n-Propyl-, O-iso-Propyl-, O-n-Butyl-, O-iso-Butyl-, O-sek.-Butyl- und O-tert.-Butyl-S-[5-chlor-pyrimidin(2)yl]-methandithiophosphonsäureester.

O-Methyl-, O-Äthyl-, O-n-Propyl-, O-iso-Propyl-, O-n-Butyl-, O-iso-Butyl-, O-sek.-Butyl- und O-tert.-Butyl-S-[5-brom-pyrimidin(2)yl]-methandithiophosphonsäureester.

O-Methyl-, O-Äthyl-, O-n-Propyl-, O-iso-Propyl-, O-n-Butyl-, O-iso-Butyl-, O-sek.-Butyl- und O-tert.-Butyl-S-[5-chlor-pyrimidin(2)yl]-äthandithiophosphonsäureester.

O-Methyl-, O-Äthyl-, O-n-Propyl-, O-iso-Propyl-, O-n-Butyl-, O-iso-Butyl-, O-sek.-Butyl- und O-tert.-Butyl-S-[5-brom-pyrimidin(2)yl]-äthandithiophosphonsäureester.

O-Methyl-, O-Äthyl-, O-n-Propyl-, O-iso-Propyl-, O-n-Butyl-, O-iso-Butyl-, O-sek.-Butyl- und O-tert.-Butyl-S-[5-chlor-pyrimidin(2)yl]-n-propandithiophosphonsäureester.

O-Methyl-, O-Äthyl-, O-n-Propyl-, O-iso-Propyl-, O-n-Butyl-, O-iso-Butyl-, O-sek.-Butyl- und O-tert.-Butyl-S-[5-brom-pyrimidin(2)yl]-n-propandithiophosphonsäureester.

O-Methyl-, O-Äthyl-, O-n-Propyl-, O-iso-Propyl-, O-n-Butyl-, O-iso-Butyl-, O-sek.-Butyl- und O-tert.-Butyl-S-[5-chlor-pyrimidin(2)yl]-iso-propandithiophosphonsäureester.

O-Methyl-, O-Äthyl-, O-n-Propyl-, O-iso-Propyl-, O-n-Butyl-, O-iso-Butyl-, O-sek.-Butyl- und O-tert.-Butyl-S-/5-brom-pyrimidin(2)yl/-iso-propandithiophosphonsäureester.

O-Methyl-, O-Äthyl-, O-n-Propyl-, O-iso-Propyl-, O-n-Butyl-, O-iso-Butyl-, O-sek.-Butyl- und O-tert.-Butyl-S-/5-chlor-pyrimidin(2)yl/-n-butandithiophosphonsäureester.

O-Methyl-, O-Äthyl-, O-n-Propyl-, O-iso-Propyl-, O-n-Butyl-, O-iso-Butyl-, O-sek.-Butyl- und O-tert.-Butyl-S-/5-brom-pyrimidin(2)yl/-n-butandithiophosphonsäureester .

O-Methyl-, O-Äthyl-, O-n-Propyl-, O-iso-Propyl-, O-n-Butyl-, O-iso-Butyl-, O-sek.-Butyl- und O-tert.-Butyl-S-/5-chlor-pyrimidin(2)yl/-iso-butandithiophosphonsäureester.

O-Methyl-, O-Äthyl-, O-n-Propyl-, O-iso-Propyl-, O-n-Butyl-, O-iso-Butyl-, O-sek.-Butyl- und O-tert.-Butyl-S-/5-brom-pyrimidin(2)yl/-iso-butandithiophosphonsäureester.

O-Methyl-, O-Äthyl-, O-n-Propyl-, O-iso-Propyl-, O-n-Butyl-, O-iso-Butyl-, O-sek.-Butyl- und O-tert.-Butyl-S-/5-chlor-pyrimidin(2)yl/-sek.-butandithiophosphonsäureester.

O-Methyl-, O-Äthyl-, O-n-Propyl-, O-iso-Propyl-, O-n-Butyl-, O-iso-Butyl-, O-sek.-Butyl- und O-tert.-Butyl-S-/5-Brom-pyrimidin(2)yl/-sek.-butandithiophosphonsäureester.

O-Methyl-, O-Äthyl-, O-n-Propyl-, O-iso-Propyl-, O-n-Butyl-, O-iso-Butyl-, O-sek.-Butyl- und O-tert.-Butyl-S-[5-chlor-pyrimidin(2)yl]-benzoldithiophosphonsäureester.

O-Methyl-, O-Äthyl-, O-n-Propyl-, O-iso-Propyl-, O-n-Butyl-, O-iso-Butyl-, O-sek.-Butyl- und O-tert.-Butyl-S-[5-brom-pyrimidin(2)yl]-benzoldithiophosphonsäureester.

Wie bereits mehrfach erwähnt, zeichnen sich die erfindungsgemäßen Pyrimidin(2)yl-thiono-thiol-phosphor(phosphon)-säureester durch eine hervorragende insektizide und akarizide Wirksamkeit aus. Sie wirken gegenüber Pflanzen-, Hygiene- und Vorratsschädlingen und besitzen bei geringer Phytotoxizität sowohl eine gute Wirkung gegen saugende als auch gegen fressende Insekten und Milben.

Aus diesem Grunde können die erfindungsgemäßen Verbindungen mit Erfolg im Pflanzenschutz sowie auf dem Hygiene- und Vorratsschutzsektor als Schädlingsbekämpfungsmittel eingesetzt werden.

Die Wirkstoffe eignen sich bei guter Pflanzenverträglichkeit und günstiger Warmblütertoxizität zur Bekämpfung von tierischen Schädlingen, insbesondere Insekten und Spinnentieren die in der Landwirtschaft, in Forsten, im Vorrats- und Materialschutz sowie auf dem Hygienesektor vorkommen. Sie sind gegen normal sensible und resistente Arten sowie gegen alle oder einzelne Entwicklungsstadien wirksam. Zu den oben erwähnten Schädlingen gehören:

Aus der Ordnung der Isopoda z. B. Oniscus asellus, Armadillidium vulgare, Porcellio scaber.
Aus der Ordnung der Diplopoda z. B. Blaniulus guttulatus.
Aus der Ordnung der Chilopoda z. B. Geophilus carpophagus, Scutigera spec.
Aus der Ordnung der Symphyla z. B. Scutigerella immaculata.
Aus der Ordnung der Thysanura z. B. Lepisma saccharina.
Aus der Ordnung der Collembola z. B. Onychiurus armatus.
Aus der Ordnung der Orthoptera z. B. Blatta orientalis, Periplaneta americana, Leucophaea maderae, Blattella germanica, Acheta domesticus, Gryllotalpa spp., Locusta migratoria migratorioides, Melanoplus differentialis, Schistocerca gregaria.
Aus der Ordnung der Dermaptera z. B. Forficula auricularia.
Aus der Ordnung der Isoptera z. B. Reticulitermes spp..
Aus der Ordnung der Anoplura z. B. Phylloxera vastatrix, Pemphigus spp., Pediculus humanus corporis, Haematopinus spp., Linognathus spp.
Aus der Ordnung der Mallophaga z.B. Trichodectes spp., Damalinea spp.
Aus der Ordnung der Thysanoptera z.B. Hercinothrips femoralis, Thrips tabaci.
Aus der Ordnung der Heteroptera z.B. Eurygaster spp., Dysdercus intermedius, Piesma quadrata, Cimex lectularius, Rhodnius prolixus, Triatoma spp.
Aus der Ordnung der Homoptera z.B. Aleurodes brassicae, Bemisia tabaci, Trialeurodes vaporariorum, Aphis gossypii, Brevicoryne brassicae, Cryptomyzus ribis, Doralis fabae,

Doralis pomi, Eriosoma lanigerum, Hyalopterus arundinis, Macrosiphum avenae, Myzus spp., Phorodon humuli, Rhopalosiphum padi, Empoasca spp., Euscelis bilobatus, Nephotettix cincticeps, Lecanium corni, Saissetia oleae, Laodelphax striatellus, Nilaparvata lugens, Aonidiella aurantii, Aspidiotus hederae, Pseudococcus spp., Psylla spp..

Aus der Ordnung der Lepidoptera z. B. Pectinophora gossypiella, Bupalus piniarius, Cheimatobia brumata, Lithocolletis blancardella, Hyponomeuta padella, Plutella maculipennis, Malacosoma neustria, Euproctis chrysorrhoea, Lymantria spp., Bucculatrix thurberiella, Phyllocnistis citrella, Agrotis spp., Euxoa spp., Feltia spp., Earias insulana, Heliothis spp., Laphygma exigua, Mamestra brassicae, Panolis flammea, Prodenia litura, Spodoptera spp., Trichoplusia ni, Carpocapsa pomonella, Pieris spp., Chilo spp., Pyrausta nubilalis, Ephestia kuehniella, Galleria mellonella, Cacoecia podana, Capua reticulana, Choristoneura fumiferana, Clysia ambiguella, Homona magnanima, Tortrix viridana.

Aus der Ordnung der Coleoptera z. B. Anobium punctatum, Rhizopertha dominica, Bruchidius obtectus, Acanthoscelides obtectus, Hylotrupes bajulus, Agelastica alni, Leptinotarsa decemlineata, Phaedon cochleariae, Diabrotica spp., Psylliodes chrysocephala, Epilachna varivestis, Atomaria spp., Oryzaephilus surinamensis, Anthonomus spp., Sitophilus spp., Otiorrhynchus sulcatus, Cosmopolites sordidus, Ceuthorrhynchus assimilis, Hypera postica, Dermestes spp., Trogoderma spp., Anthrenus spp., Attagenus spp., Lyctus spp., Meligethes aeneus, Ptinus spp., Niptus hololeucus, Gibbium psylloides, Tribolium spp., Tenebrio molitor, Agriotes spp., Conoderus spp., Melolontha melolontha, Amphimallon solstitialis, Costelytra zealandica.

Aus der Ordnung der Hymenoptera z. B. Diprion spp., Hoplocampa spp., Lasius spp., Monomorium pharaonis, Vespa spp.

Aus der Ordnung der Diptera z.B. Aëdes spp., Anopheles spp., Culex spp., Drosophila melanogaster, Musca spp., Fannia spp., Calliphora erythrocephala, Lucilia spp., Chrysomyia spp., Cuterebra spp., Gastrophilus spp., Hyppobosca spp., Stomoxys spp., Oestrus spp., Hypoderma spp., Tabanus spp., Tannia spp.,

Bibio hortulanus, Oscinella frit, Phorbia spp., Pegomyia hyoscyami, Ceratitis capitata, Dacus oleae, Tipula paludosa.

Aus der Ordnung der Siphonaptera z.B. Xenopsylla cheopis, Ceratophyllus spp..

Aus der Ordnung der Arachnida z.B. Scorpio maurus, Latrodectus mactans.

Aus der Ordnung der Acarina z.B. Acarus siro, Argas spp., Ornithodoros spp., Dermanyssus gallinae, Eriophyes ribis, Phyllocoptruta oleivora, Boophilus spp., Rhipicephalus spp., Amblyomma spp., Hyalomma spp., Ixodes spp., Psoroptes spp., Chorioptes spp., Sarcoptes spp., Tarsonemus spp., Bryobia praetiosa, Panonychus spp., Tetranychus spp..

Die Wirkstoffe können in die üblichen Formulierungen übergeführt werden, wie Lösungen, Emulsionen, Spritzpulver, Suspensionen, Pulver, Stäubemittel, Schäume, Pasten, lösliche Pulver, Granulate, Aerosole, Suspensions-Emulsionskonzentrate, Saatgutpuder, Wirkstoff-imprägnierte Natur- und synthetische Stoffe, Feinstverkapselungen in polymeren Stoffen und in Hüllmassen für Saatgut, ferner in Formulierungen mit Brennsätzen, wie Räucherpatronen, -dosen, -spiralen u.ä. sowie ULV-Kalt- und Warmnebel-Formulierungen.

Diese Formulierungen werden in bekannter Weise hergestellt, z.B. durch Vermischen der Wirkstoffe mit Streckmitteln, also flüssigen Lösungsmitteln, unter Druck stehenden verflüssigten Gasen und/oder festen Trägerstoffen, gegebenenfalls unter Verwendung von oberflächenaktiven Mitteln, also Emulgiermitteln und/oder Dispergiermitteln und/oder schaumerzeugenden Mitteln. Im Falle der Benutzung von Wasser als Streckmittel können z.B. auch organische Lösungsmittel als Hilfslösungsmittel verwendet werden. Als flüssige Lösungsmittel kommen im wesentlichen infrage: Aromaten, wie Xylol, Toluol, oder Alkylnaphthaline, chlorierte Aromaten oder chlorierte aliphatische Kohlenwasserstoffe,

wie Chlorbenzole, Chloräthylene oder Methylenchlorid, aliphatische Kohlenwasserstoffe, wie Cyclohexan oder Paraffine, z.B. Erdölfraktionen, Alkohole, wie Butanol oder Glycol sowie deren Äther und Ester, Ketone, wie Aceton, Methyläthylketon, Methylisobutylketon oder Cyclohexanon, stark polare Lösungsmittel, wie Dimethylformamid und Dimethylsulfoxid, sowie Wasser; mit verflüssigten gasförmigen Streckmitteln oder Trägerstoffen sind solche Flüssigkeiten gemeint, welche bei normaler Temperatur und unter Normaldruck gasförmig sind, z.B. Aerosol-Treibgase, wie Halogenkohlenwasserstoffe sowie Butan, Propan, Stickstoff und Kohlendioxid; als feste Trägerstoffe: natürliche Gesteinsmehle, wie Kaoline, Tonerden, Talkum, Kreide, Quarz, Attapulgit, Montmorillonit oder Diatomeenerde und synthetische Gesteinsmehle, wie hochdisperse Kieselsäure, Aluminiumoxid und Silikate; als feste Trägerstoffe für Granulate: gebrochene und fraktionierte natürliche Gesteine wie Calcit, Marmor, Bims, Sepiolith, Dolomit sowie synthetische Granulate aus anorganischen und organischen Mehlen sowie Granulate aus organischem Material wie Sägemehle, Kokosnußschalen, Maiskolben und Tabakstengel; als Emulgier- und/oder schaumerzeugende Mittel: nichtionogene und anionische Emulgatoren, wie Polyoxyäthylen-Fettsäure-Ester, Polyoxyäthylen-Fettalkohol-Äther, z.B. Alkylaryl-polyglykol-äther, Alkylsulfonate, Alkylsulfate, Arylsulfonate sowie Eiweißhydrolysate; als Dispergiermittel: z.B. Lignin—Sulfitablaugen und Methylcellulose.

Es können in den Formulierungen Haftmittel wie Carboxymethylcellulose, natürliche und synthetische pulverige, körnige oder latexförmige Polymere verwendet werden, wie Gummiarabicum, Polyvinylalkohol, Polyvinylacetat.

Es können Farbstoffe wie anorganische Pigmente, z.B. Eisenoxid, Titanoxid, Ferrocyanblau und organische Farbstoffe, wie Alizarin-, Azo-Metallphthalocyaninfarbstoffe und Spurennährstoffe wie Salze von Eisen, Mangan, Bor, Kupfer, Kobalt, Molybdän und Zink verwendet werden.

Die Formulierungen enthalten im allgemeinen zwischen 0,1 und 95 Gewichtsprozent Wirkstoff, vorzugsweise zwischen 0,5 und 90 %.

Die Anwendung der erfindungsgemäßen Wirkstoffe erfolgt in Form ihrer handelsüblichen Formulierungen und/oder den aus diesen Formulierungen bereiteten Anwendungsformen.

Der Wirkstoffgehalt der aus den handelsüblichen Formulierungen bereiteten Anwendungsformen kann in weiten Bereichen variieren. Die Wirkstoffkonzentration der Anwendungsformen kann von 0,0000001 bis zu 100 Gew.-% Wirkstoff, vorzugsweise zwischen 0,01 und 10 Gew.-% liegen.

Die Anwendung geschieht in einer den Anwendungsformen angepaßten üblichen Weise.

Bei der Anwendung gegen Hygiene- und Vorratsschädlinge zeichnen sich die Wirkstoffe durch eine hervorragende Residualwirkung auf Holz und Ton sowie durch eine gute Alkalistabilität auf gekälkten Unterlagen aus.

Beispiel A

Drosophila-Test

Lösungsmittel: 3 Gewichtsteile
Emulgator: 1 Gewichtsteil Alkylarylpolyglykoläther

Zur Herstellung einer zweckmäßigen Wirkstoffzubereitung vermischt man 1 Gewichtsteil Wirkstoff mit der angegebenen Menge Lösungsmittel und der angegebenen Menge Emulgator und verdünnt das Konzentrat mit Wasser auf die gewünschte Konzentration.

1 $cm^3$ der Wirkstoffzubereitung wird auf eine Filterpapierscheibe (7 cm Durchmesser) aufpipettiert. Man legt diese naß auf die Öffnung eines Glasgefäßes, in dem sich 50 Taufliegen (Drosophila melanogaster) befinden und bedeckt es mit einer Glasplatte.

Nach der gewünschten Zeit bestimmt man die Abtötung in %. Dabei bedeutet 100 %, daß alle Fliegen abgetötet wurden; 0 % bedeutet, daß keine Fliegen abgetötet wurden.

Bei diesem Test zeigen z.B. die folgenden Verbindungen der Herstellungsbeispiele überlegene Wirksamkeit gegenüber dem Stand der Technik: 1, 2, 3, 4, 5, 6, 8, 9, 10 und 11.

Beispiel B

Tetranychus-Test (resistent)

Lösungsmittel: 3 Gewichtsteile
Emulgator: 1 Gewichtsteil Alkylarylpolyglykoläther

Zur Herstellung einer zweckmäßigen Wirkstoffzubereitung vermischt man 1 Gewichtsteil Wirkstoff mit der angegebenen Menge Lösungsmittel und der angegebenen Menge Emulgator und verdünnt das Konzentrat mit Wasser auf die gewünschte Konzentration.

Bohnenpflanzen (Phaseolus vulgaris), die stark von allen Entwicklungsstadien der gemeinen Spinnmilbe oder Bohnenspinnmilbe (Tetranychus urticae) befallen sind, werden durch Tauchen in die Wirkstoffzubereitung der gewünschten Konzentration behandelt.

Nach der gewünschten Zeit wird die Abtötung in % bestimmt. Dabei bedeutet 100 %, daß alle Spinnmilben abgetötet wurden; 0 % bedeutet, daß keine Spinnmilben abgetötet wurden.

Bei diesem Test zeigen z.B. die folgenden Verbindungen der Herstellungsbeispiele überlegene Wirksamkeit gegenüber dem Stand der Technik: 1, 2, 3, 4, 5, 6, 8, 9, 10 und 11.

Beispiel C

$LT_{100}$-Test für Dipteren

Testtiere: Aedes aegypti
Zahl der Testtiere: 20
Lösungsmittel: Aceton

2 Gewichtsteile Wirkstoff werden in 1000 Volumenteilen Lösungsmittel aufgenommen. Die so erhaltene Lösung wird mit weiterem Lösungsmittel auf die gewünschten geringeren Konzentrationen verdünnt.

2,5 ml Wirkstofflösung werden in eine Petrischale pipettiert. Auf dem Boden der Petrischale befindet sich ein Filterpapier mit einem Durchmesser von etwa 9,5 cm. Die Petrischale bleibt so lange offen stehen, bis das Lösungsmittel vollständig verdunstet ist. Je nach Konzentration der Wirkstofflösung ist die Menge Wirkstoff pro $m^2$ Filterpapier verschieden hoch. Anschließend gibt man die angegebene Anzahl der Testtiere in die Petrischale und bedeckt sie mit einem Glasdeckel.

Der Zustand der Testtiere wird laufend kontrolliert. Es wird diejenige Zeit ermittelt, welche für einen 100 %igen knock down-Effekt notwendig ist.

Bei diesem Test zeigen z.B. die folgenden Verbindungen der Herstellungsbeispiele überlegene Wirkung gegenüber dem Stand der Technik: 1, 2, 3, 4, 5, 8, 9 und 10.

Herstellungsbeispiele

Beispiel 1:

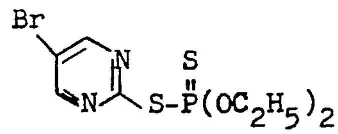

Eine Mischung aus 9,7 g (o,o5 Mol) 2-Chlor-5-brompyrimidin, 9,3 g (o,o5 Mol) O,O-Diäthyldithiophosphorsäurediester und 1oo ml Aceton wird 12 Stunden bei 45°C gerührt. Dann gibt man 2oo ml Toluol zu und schüttelt zweimal mit verdünnter Natriumhydrogencarbonatlösung aus. Die organische Phase wird über Natriumsulfat getrocknet und im Vakuum eingedampft. Der Rückstand wird andestilliert. Man erhält so 12 g (7o% der Theorie) O,O-Diäthyl-S-[5-brom-pyrimidin(2)yl]-dithiophosphorsäureester in Form eines gelben Öles mit dem Brechungsindex $n_D^{21}$: 1,5979.

Beispiel 2:

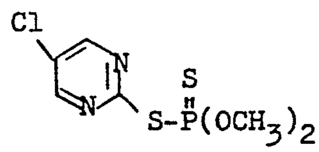

Zu einem Gemisch aus 14,9 g (o,1 Mol) 2,5-Dichlorpyrimidin, 21,6 g (o,11 Mol) O,O-Dimethyldithiophosphorsäurediester-Kaliumsalz, 15o ml Toluol und 5o ml Wasser gibt man auf einmal eine Mischung aus 1o ml konzentrierter Salzsäure und 2o g Eis. Man rührt 24 Stunden bei Raumtemperatur nach, trennt die wäßrige Phase ab und schüttelt einmal mit Kaliumcarbonatlösung und noch einmal mit Wasser aus. Die organische Phase wird über Natriumsulfat getrocknet und im Vakuum eingedampft. Der Rückstand wird mit Petroläther verrieben und nach Kristallisation

abgesaugt. Man erhält so 18 g (67 % der Theorie) O,O-Dimethyl-S-[5-chlorpyrimidin(2)yl]-dithiophosphorsäureester in Form schwach gelber Kristalle mit dem Schmelzpunkt 54°C.

Analog einem der Beispiele 1 oder 2 können die folgenden Verbindungen der Formel

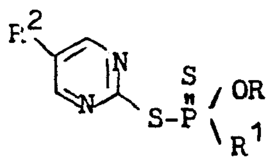

hergestellt werden:

| Bei-spiel Nr. | R | $R^1$ | $R^2$ | Ausbeute (% der Theorie) | Physikal. Daten (Brechungsindex; Schmelzpunkt °C) |
|---|---|---|---|---|---|
| 3 | $CH_3$ | $OCH_3$ | Br | 54 | 63 |
| 4 | $C_3H_7$-iso | $CH_3$ | Br | 43 | 59 |
| 5 | $C_2H_5$ | $C_2H_5$ | Br | 55 | $n_D^{24}$:1,6186 |
| 6 | $CH_3$ | $C_2H_5$ | Br | 48 | $n_D^{24}$:1,6366 |
| 7 | $C_2H_5$ | 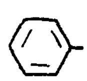 | Br | 24 | $n_D^{22}$:1,6534 |
| 8 | $C_2H_5$ | $OC_2H_5$ | Cl | 7o | $n_D^{23}$:1,5728 |
| 9 | $C_2H_5$ | $C_2H_5$ | Cl | 73 | $n_D^{23}$:1,598o |

| Bei-spiel Nr. | R | $R^1$ | $R^2$ | Ausbeute (% der Theorie) | Physikal. Daten (Brechungsindex; Schmelzpunkt °C) |
|---|---|---|---|---|---|
| 1o | $CH_3$ | $C_2H_5$ | Cl | 71 | $n_D^{23}$:1,615o |
| 11 | $C_3H_7$-iso | $CH_3$ | Cl | 39 | 68 |
| 12 | $C_2H_5$ | $CH_3$ | Cl | | |
| 13 | $C_2H_5$ | $OC_3H_7$-n | Cl | | |

Die als Ausgangsmaterialien einzusetzenden 2-Chlor-5-halogen-pyrimidine können z.B. wie folgt dargestellt werden:

<u>Beispiel a:</u>

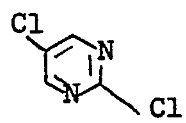

Eine Mischung aus 131 g (1 Mol) 2-Hydroxy-5-chlorpyrimidin [Darstellung s. L.A. Paquette u. W.C. Farley J. Org. Chem. <u>32</u> (1967) Seite 2725] und 4oo ml Phosphoroxidchlorid wird 3 Stunden unter Rückfluß gekocht. Dann dampft man das Gemisch im Vakuum ein, gießt den Rückstand auf Eis und schüttelt 2 mal mit je 3oo ml Methylenchlorid aus. Die organischen Phasen werden über Natriumsulfat getrocknet, dann destilliert man das Lösungsmittel im Vakuum ab. Zurück bleiben 73 g (49 % der Theorie) 2,5-Dichlorpyrimidin mit dem Schmelzpunkt 51°C.

In analoger Weise kann die folgende Verbindung hergestellt werden:

Beispiel b:

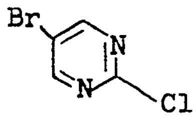

in 77%iger Ausbeute der Theorie und mit dem Schmelzpunkt 77°C.

 0003098

Patentansprüche

1. Pyrimidin (2) yl-thiono-thiol-phosphor(phosphon)-säureester der Formel

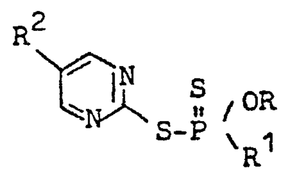

(I)

in welcher
R für Alkyl,
$R^1$ für Alkyl, Aryl oder Alkoxy und
$R^2$ für Halogen stehen.

2. Verfahren zur Herstellung von Pyrimdin(2)yl-thiono-thiol-phosphor-(phosphon)-säureestern, dadurch gekennzeichnet, daß man Thiol-thiono-phosphor(phosphon)-säureester der Formel

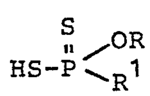

(II)

in welcher
R für Alkyl und
$R^1$ für Alkyl, Aryl oder Alkoxy stehen,

mit 2-Chlor-pyrimidinen der Formel

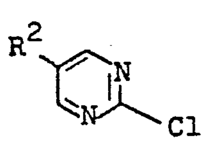

(III)

in welcher
$R^2$ für Halogen steht,
gegebenenfalls in Gegenwart eines Lösungs- oder Verdünnungsmittels umsetzt, wobei gegebenenfalls die Thiolverbindung II ohne Zwischenisolierung aus den entsprechenden Alkalisalzen durch Säurezugabe freigesetzt werden kann.

3. Insektizide und akarizide Mittel, gekennzeichnet durch einen Gehalt an mindestens einem Pyrimidin(2)yl-thiono-thiol-phosphor(phosphon)-säureester gemäß Formel I in Anspruch 1.

4. Verfahren zur Bekämpfung von Insekten und Milben, dadurch gekennzeichnet, daß man Pyrimidin(2)yl-thiono-thiol-phosphor(phosphon)-säureester gemäß Formel I in Anspruch 1 auf Insekten und Milben und/oder ihren Lebensraum einwirken läßt.

5. Verwendung von Pyrimidin(2)yl-thiono-thiol-phosphor(phosphon)-säureestern gemäß Formel I in Anspruch 1 zur Bekämpfung von Insekten und Milben.

6. Verfahren zur Herstellung von insektiziden und akariziden Mitteln, dadurch gekennzeichnet, daß man Pyrimidin(2)yl-thiono-thiol-phosphor(phosphon)säureester gemäß Formel I in Anspruch 1 mit Streckmitteln und/oder oberflächenaktiven Mitteln vermischt.

Europäisches Patentamt

# EUROPÄISCHER RECHERCHENBERICHT

0003098

Nummer der Anmeldung
EP 79 10 0004

| EINSCHLÄGIGE DOKUMENTE | | | KLASSIFIKATION DER ANMELDUNG (Int.Cl.²) |
|---|---|---|---|
| Kategorie | Kennzeichnung des Dokuments mit Angabe, soweit erforderlich, der maßgeblichen Teile | betrifft Anspruch | |
| | US - A - 3 741 968 (HANBEIN)<br>* Seite 1 *<br>---- | 1-6 | C 07 F 9/65<br>A 01 N 9/36 |
| | | | RECHERCHIERTE SACHGEBIETE (Int. Cl.²) |
| | | | C 07 F 9/65 |
| | | | KATEGORIE DER GENANNTEN DOKUMENTE<br>X: von besonderer Bedeutung<br>A: technologischer Hintergrund<br>O: nichtschriftliche Offenbarung<br>P: Zwischenliteratur<br>T: der Erfindung zugrunde liegende Theorien oder Grundsätze<br>E: kollidierende Anmeldung<br>D: in der Anmeldung angeführtes Dokument<br>L: aus andern Gründen angeführtes Dokument<br>&: Mitglied der gleichen Patentfamilie, übereinstimmendes Dokument |
| p | Der vorliegende Recherchenbericht wurde für alle Patentansprüche erstellt. | | |

| Recherchenort | Abschlußdatum der Recherche | Prüfer |
|---|---|---|
| Den Haag | 26-02-1979 | MARANDON |